# EUROPEAN PATENT APPLICATION

(11) **EP 2 778 139 A1**
(43) Date of publication of application: **17.09.2014**
(21) Application number: 12847753.6
(22) Date of filing: 08.08.2012
(51) Int. Cl.: C02F 1/14, B01D 53/22, B01D 71/36, C02F 1/04

(54) **DISTILLATION APPARATUS AND DISTILLATION METHOD**

(30) Priority: 11.11.2011 JP 2011247535
(71) Applicant: Nitto Denko Corporation, Ibaraki-shi, Osaka 567-8680 (JP)
(72) Inventor: MATSUSHIMA, Ryoichi, Ibaraki-shi, Osaka 567-8680 (JP)
(74) Representative: Intès, Didier Gérard André
(86) International application number: PCT/JP2012/070176
(87) International publication number: WO 2013/069350

(57) **Abstract**

A distillation apparatus which can be automatically replenished with a liquid, does not require a large amount of energy and can be produced at suppressed facility cost is provided. A distillation apparatus (100) for generating distilled water by use of solar heat (72) includes a heat transmissive window (10) that transmits the solar heat (72); a housing (20) that secures the heat transmissive window (10); and a heat absorber (25) that is located in the housing (20) and absorbs the solar heat (74) transmitted through the heat transmissive window (10). The housing (20) includes a first chamber (21) in which the heat absorber (25) is located; and a second chamber (22) connected to the first chamber (21) via a water vapor permeable membrane (40) that allows permeation of water vapor (64) generated in the first chamber (21). An intake opening (50) through which a liquid is introduced is provided below the first chamber (21). A water level adjustment mechanism (30) that adjusts a water level L of the liquid (63) covering the heat absorber (25) is provided in the first chamber (21).

## Description

### TECHNICAL FIELD

The present invention relates a distillation apparatus and a distillation method, and specifically, to a distillation apparatus for generating distilled water (fresh water) from a liquid in a storage area (e.g., seawater) by use of solar heat.

The present application claims the benefit of priority based upon Japanese Patent Application No. 2011-247535 filed on November 11, 2011, the entirety of which is incorporated herein by reference.

### BACKGROUND ART

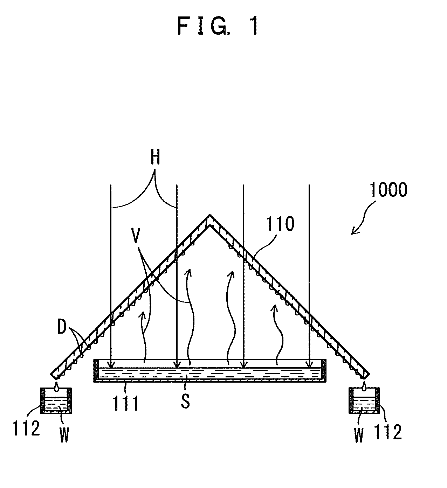

As a distillation apparatus for generating fresh water from seawater by use of solar heat, a distillation apparatus as shown in FIG. 1 has been proposed. A distillation apparatus 1000 shown in FIG. 1 includes a container 111 containing a solution S and provided below a mountain-shaped condensation plate 110 that transmits solar heat H, and dishes 112 for a distilled liquid W provided below both of two ends of the condensation plate 110 (e.g., Patent Document 1).

The distillation apparatus 1000 operates as follows. The solar heat H (sunlight) which is directed from above the condensation plate 110 is transmitted through the condensation plate 110 and heats the solution S contained in the container 111. A solvent of the heated solution S rises as vapor V and contacts an inner surface of the condensation plate 110. The vapor V is cooled by the contact and is condensed to become dew D. The dew D runs along the inner surface of the condensation plate 110 and falls, and then is accumulated in the dishes 112. As a result, the distilled liquid W is obtained.

### CITATION LIST

### PATENT DOCUMENT

Patent Document 1: Japanese Patent Laid-Open Publication No. Hei 7-251036

### SUMMARY OF THE INVENTION

### TECHNICAL PROBLEM

The distillation apparatus 1000 shown in FIG. 1 has a problem that when the container 111 runs out of the solution S as a result of vaporization of the solution S, the distiller liquid W cannot be obtained unless the container 111 is replenished with the solution S. The replenishment of the container 111 with the solution S is often difficult to be controlled.

For producing a large amount of distilled water, low pressure distillation is usable to improve the thermal efficiency. A practical desalination plant performs distillation by use of a combination of a large number of decompression chambers. Therefore, this technique is called a "multi-stage flash method". The multi-stage flash method can produce a large amount of fresh water regardless of the quality of the seawater, but has a problem of requiring a large amount of energy due to an extremely poor thermal efficiency thereof. Since a large amount of energy is required, the desalination plant is often built as an annex to an oil refinery or a thermoelectric power plant. The desalination plant cannot be easily built at some other site.

A large amount of distilled water may also be produced by a reverse osmosis method instead of the multi-stage flash method. According to the reverse osmosis method, seawater is pressurized and permeates through a reverse osmosis membrane (RO membrane) and thus a salt content in the seawater is concentrated and disposed of, so that fresh water is filtered out. Although having a better thermal efficiency than the multi-stage flash method, the reverse osmosis method has problems that the reverse osmosis membrane needs to be pretreated thoroughly so as not to be clogged with microorganisms in the seawater or deposits and that the facility's cost is high.

Under such circumstances, the present inventor sought to develop, and made active studies on, a technique for generating distilled water (fresh water) by use of solar heat in a simple manner merely by floating an apparatus on the sea, lake or pond, and achieved the present invention.

The present invention made in light of these points has a main object of providing a distillation apparatus which can be automatically replenished with a liquid, does not require a large amount of energy and can be produced at suppressed facility cost.

### SOLUTION TO THE PROBLEM

A distillation apparatus for generating distilled water by use of solar heat includes a heat transmissive window that transmits the solar heat; a housing that secures the heat transmissive window; and a heat absorber that is located in the housing and absorbs the solar heat transmitted through the heat transmissive window. The housing includes a first chamber in which the heat absorber is located; and a second chamber connected to the first chamber via a water vapor permeable membrane that allows permeation of water vapor generated in the first chamber. An intake opening through which a liquid is introduced is provided below the first chamber; and a water level adjustment mechanism that adjusts a water level of the liquid covering the heat absorber is provided in the first chamber.

In a preferable embodiment, the housing floats on a storage area in which a liquid is stored; the liquid in the storage area is introduced through the intake opening; the liquid introduced through the intake opening is held inside the first chamber so as to cover a surface of the heat absorber; and water vapor from the liquid covering the surface of the heat absorber permeates through the water vapor permeable membrane and is condensed at a wall of the second chamber to become distilled water.

In a preferable embodiment, an introduction opening extending in a vertical direction from the intake opening is formed in the first chamber; the water level adjustment mechanism is a float valve; and the float valve includes a float located at a liquid surface in the first chamber; a coupling bar connected to the float and located inside the introduction opening; and a stop valve located at a bottom end of the coupling bar.

In a preferable embodiment, a first member on which the heat absorber is located; a second member connected to the first member and having the introduction opening formed therein; and a third member that separates the first chamber and the second chamber from each other.

In a preferable embodiment, the water vapor permeable membrane is located on a part of the third member.

In a preferable embodiment, the water vapor permeable membrane is formed of a porous polytetrafluoroethylene membrane.

In a preferable embodiment, an opening opened outward is formed in an area of the housing that is below the second member.

In a preferable embodiment, a filter that allows permeation of a liquid introduced through the intake opening is provided in the intake opening.

In a preferable embodiment, a gas permeable membrane that adjusts an inner pressure and an outer pressure of the second chamber is provided in a part of the second chamber.

In a preferable embodiment, the heat absorber is formed of an iron plate.

In a preferable embodiment, the heat absorber is formed of a heat storing material.

In a preferable embodiment, a surface of the heat absorber is black.

In a preferable embodiment, the heat transmissive window is formed of glass or a light transmissive resin.

In a preferable embodiment, the distillation apparatus is connected to a pipe that discharges the distilled water outside.

In a preferable embodiment, the pipe is connected to a pump unit that moves the distilled water in the pipe.

In a preferable embodiment, the pump unit is connected to a plurality of the distillation apparatuses via the pipe.

In a preferable embodiment, the pump unit is installed on land.

A distillation method for generating distilled water by use of solar heat includes the steps of floating, on a storage area in which a liquid is stored, a housing that secures a heat transmissive window that transmits the solar heat; introducing the liquid in the storage area into a first chamber of the housing; vaporizing the liquid in the first chamber of the housing by the solar heat transmitted through the transmissive window; and condensing water vapor, obtained by the vaporization, in a second chamber of the housing. A water level of the liquid in the first chamber of the housing is kept in a predetermined range by a water level adjustment mechanism.

In a preferable embodiment, the water level adjustment mechanism is a float valve; and an amount of the liquid to be introduced into the first chamber of the housing is automatically adjusted by the float valve.

In a preferable embodiment, the water vapor obtained by vaporizing the liquid in the first chamber of the housing is moved to the second chamber of the housing through a water vapor permeable membrane, and is condensed at a wall of the second chamber of the housing.

In a preferable embodiment, the storage area is one selected from the group consisting of a sea, a lake and a pond.

In a preferable embodiment, a plurality of the housings float on the storage area; the plurality of housings are each connected via a pipe to a pump unit that absorbs the distilled water; and the distilled water is collected from the plurality of housings by the pump unit.

In the distillation apparatus according to the present invention, the housing that secures the heat transmissive window that transmits the solar heat accommodates the heat absorber that absorbs the solar heat transmitted through the heat transmissive window. The housing has an intake opening below the first chamber in which the heat absorber is located, and also accommodates a water level adjustment mechanism that adjusts the water level of the liquid covering the heat absorber. Therefore, in the state where the distillation apparatus according to the present invention floats on the storage area (sea, lake, etc.), distilled water (fresh water) can be generated while the distillation apparatus is automatically replenished with a liquid (seawater, etc.) used to generate the distilled water. In addition, the distillation apparatus according to the present invention, which uses solar heat, provides effects that a large amount of energy is not required and the facility cost can be suppressed as compared with the multi-stage flash method or the reverse osmosis method.

### BRIEF DESCRIPTION OF THE DRAWINGS

[FIG. 1] FIG. 1 shows a structure of a conventional distillation apparatus 1000.
[FIG. 2] FIG. 2 is a cross-sectional view schematically showing a structure of a distillation apparatus 100 in an embodiment according to the present invention.
[FIG. 3] FIG. 3 is a perspective view schematically showing the structure of the distillation apparatus 100 in the embodiment according to the present invention.
[FIG. 4] FIGs. 4(a) and (b) are each a cross-sectional view provided to describe an operation of a water level adjustment mechanism (float valve) 30 in the distillation apparatus 100 in the embodiment according to the present invention.
[FIG. 5] FIG. 5 shows a float 32 in the water level adjustment mechanism (float valve) 30.
[FIG. 6] FIG. 6 is a perspective view schematically showing a structure of a water vapor permeable membrane 40.
[FIG. 7] FIG. 7(a) shows amounts of heat required to vaporize water, FIG. 7(b) shows an amount of solar radiation, a system efficiency, and an amount of water (cc/time) which can be vaporized per 1 m², and FIG. 7(c) shows rough conversion among cal (calorie), J (Joule) and Wh (watt-hour).
[FIG. 8] FIG. 8 is a cross-sectional view schematically showing a modification example of the distillation apparatus 100 in the embodiment according to the present invention.
[FIG. 9] FIG. 9 schematically shows a structure of a pump station 200 including the distillation apparatuses 100 in the embodiment according to the present invention.

### DESCRIPTION OF EMBODIMENTS

Hereinafter, preferable embodiments of the present invention will be described with reference to the drawings. Elements which are other than elements specifically referred to in this specification and are necessary to carry out the present invention may be grasped as a matter of design choice for a person of ordinary skill in the art based on the conventional technology in this field. The present invention can be carried out based on the contents disclosed by this specification and the attached drawings, and the technological common knowledge in the art. The present invention is not limited to the following embodiments.

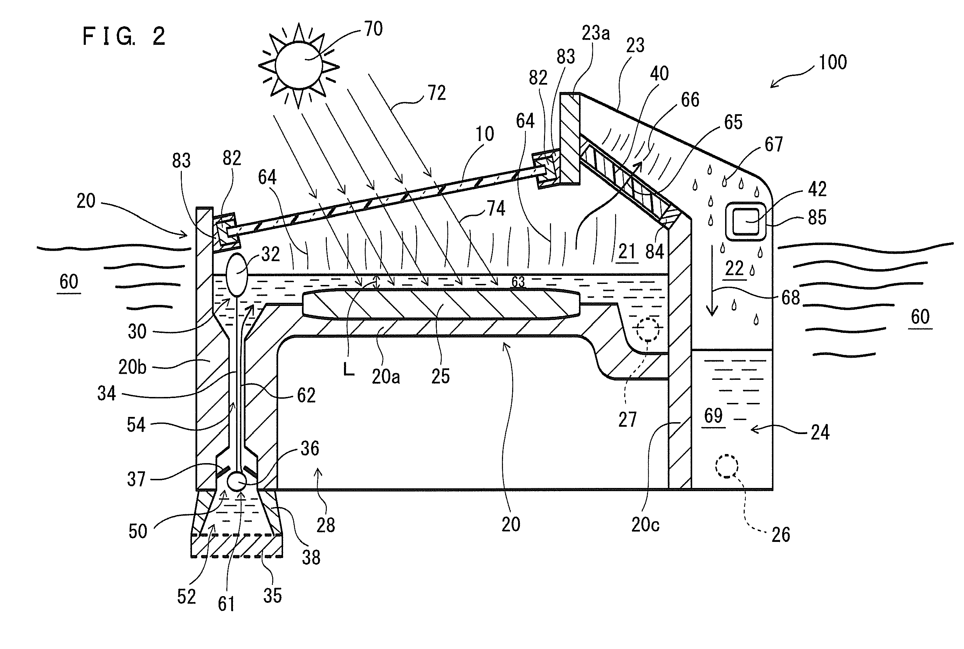

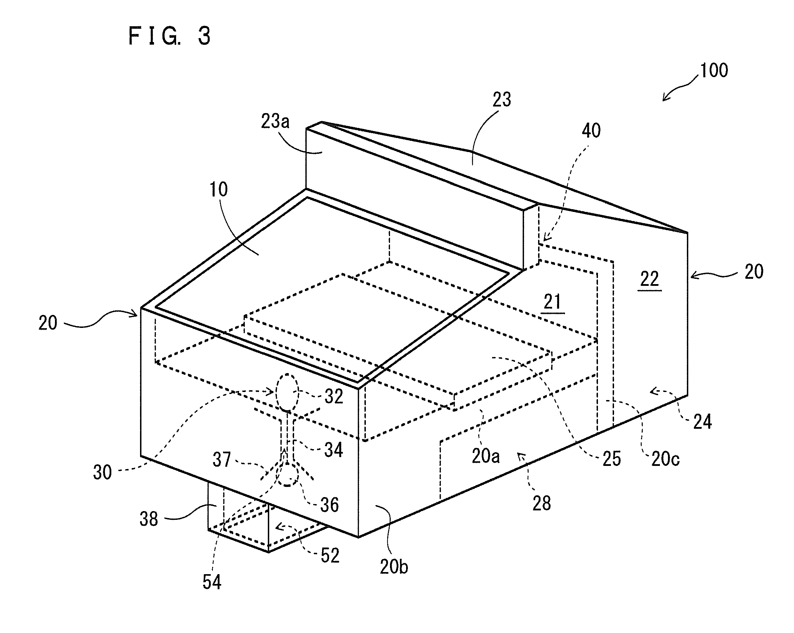

FIG. 2 is a cross-sectional view schematically showing a structure of a distillation apparatus 100 in an embodiment according to the present invention. FIG. 3 is a perspective view schematically showing the structure of the distillation apparatus 100 in this embodiment.

The distillation apparatus 100 in this embodiment is an apparatus that generates distilled water by use of solar heat 72 from the sun 70. The distillation apparatus 100 includes a heat transmissive window 10 which transmits the solar heat 72 and a housing 20 that secures the heat transmissive window 10. In the housing 20, a heat absorber 25 that absorbs the solar heat (72, 74) transmitted through the heat transmissive window 10 is provided.

The housing 20 in this embodiment is floated on a storage area 60 in which a liquid is stored. The storage area 60 is, for example, a sea, a lake, a pond or the like. In the case where the storage area 60 is a sea, the liquid is seawater and the seawater can be desalinated inside the housing 20. The storage area 60 is not limited to a natural storage area (sea, lake) but may be an artificial storage area such a dam or the like, or may be, for example, an artificial storage area which stores contaminated water that is built as an annex to a plant.

The housing 20 in this embodiment includes a first chamber 21 in which the heat absorber 25 is located and a second chamber 22 connected to the first chamber 21 via a water vapor permeable membrane 40. The water vapor permeable membrane 40 in this embodiment is a polymer film that allows water vapor 64 generated in the first chamber 21 to permeate into the second chamber 22 (arrow 65), and is formed of, for example, a fluorine resin porous membrane (typically, a polytetrafluoroethylene (PTFE) membrane). The water vapor permeable membrane 40 is not limited to being formed of a porous polytetrafluoroethylene membrane, but may be formed of a porous polyethylene membrane, a porous polypropylene membrane, a porous ceramic membrane or the like.

In the structure of this embodiment, an intake opening 50 through which a liquid (e.g., seawater) is introduced is provided in an area of the housing 20 that is below the first chamber 21. In the first chamber 21, a water level adjustment mechanism 30 that adjusts a water level (L) of a liquid 63 that covers the heat absorber 25 is provided.

The structure will be further described. In the structure of this embodiment, a liquid in the storage area 60 (e.g., seawater) is introduced through the intake opening 50 in the housing 20 floating on the storage area 60 (e.g., sea). In the structure of this embodiment, a filter 35 that allows permeation of a liquid introduced through the intake opening 50 is provided in the intake opening 50. As represented by arrow 61, the liquid (seawater) permeates through the filter 35 and is introduced through the intake opening 50. The filter 35 is, for example, a porous polytetrafluoroethylene membrane. The filter 35 is secured by a filter support member 38. Specifically, the filter 35 is attached to an attachment portion of the filter support member 38 (in the vicinity of an opening 52).

The liquid introduced through the intake opening 50 moves as represented by arrow 62 and is held inside the first chamber 21 so as to cover a surface of the heat absorber 25. The liquid 63 covering the surface of the heat absorber 25 is vaporized by a thermal energy of the solar heat (sunlight) 74 transmitted through the heat transmissive window 10 and a thermal energy from the heat absorber 25, and thus becomes the water vapor 64. The water vapor 64 from the liquid 63 in the housing 20 permeates through the water vapor permeable membrane 40, is condensed by a wall 23 of the second chamber 22 (see waterdrops 67) and is collected in a bottom portion of the second chamber 22 by gravity as represented by arrow 68 to become distilled water 69. The bottom portion of the second chamber 22 is a water storage 24 for the distilled water 69. A part of the wall 23 of the second chamber 22 (e.g., lower half) is covered with surrounding liquid (e.g., seawater) 60, which provides a cooling effect.

In the first chamber 21 of the housing 20, an introduction opening 54 extending in a vertical direction from the intake opening 50 is formed. The water level adjustment mechanism 30 in this embodiment is a float valve, which is provided in the introduction opening 54. The float valve is a self-adjusting valve that keeps a liquid surface in a water supply tank or the like at a certain water level.

The float valve 30 in this embodiment includes a float 32 located at a liquid surface in the first chamber 21, a coupling bar 34 located in the introduction opening 54, and a stop valve (36, 37) located at a bottom end of the coupling bar 34. The float 32 is a hollow sphere that floats on the water and is a member that can raise, by buoyancy, the stop valve (36) located therebelow and coupled thereto. The float 32 is formed of, for example, stainless steel or a plastic material. The coupling bar 34 is connected to a bottom portion of the float 32. The coupling bar 34 is formed of, for example, stainless steel. The stop valve includes a stopper 36 connected to the coupling bar 34 and a blocking member 37 located in the vicinity of the intake opening 50 (or in a bottom portion of the introduction opening 54). The stop valve (36) is formed of, for example, brass or a plastic material.

The housing 20 in this embodiment includes a first member 20a on which the heat absorber 25 is located, a second member 20b in which the introduction opening 54 is formed, and a third member 20c that separates the first chamber 21 and the second chamber 22 from each other. The first member 20a includes a portion extending horizontally, and the heat absorber 25 is located on the horizontal portion. The first member 20a is connected to the second member 20b. In the structure of this embodiment, as shown in FIG. 3, the first member 20a and the second member 20b are formed integrally and continuously. In a part of the second member 20b, the introduction opening 54 is formed. In the introduction opening 54, the water level adjustment mechanism (float valve) 30 is located. The first member 20a and the second member 20b may be formed separately and combined together. Herein, the horizontal portion is "horizontal" such that the heat absorber 25 is located thereon, and therefore is not limited to being strictly horizontal but may be slightly inclined, and is not limited to being flat but may be convexed and concaved.

The third member 20c of the housing 20 includes a part of a wall of the first chamber 21 and a part of a wall of the second chamber 22. In the structure of this embodiment, the water vapor permeable membrane 40 is located on a part of the third member 20c. In the example shown here, a wall member 23a which is combined with the third member 20c to seal a space in the second chamber 22 hermetically is provided. In the example shown here, the third member 20c and the wall member 23a are formed separately and combined together. Alternatively, the third member 20c and the wall member 23a may be integral together. Depending on the shape of the housing 20, the wall member 23a may not be necessary, or the third member 20c and the first member 20a may be integral together.

In the structure of this embodiment, a gas permeable membrane 42 that adjusts an inner pressure and an outer pressure of the second chamber 22 is provided in a part of the second chamber 22 of the housing 20. The gas permeable membrane 42 is provided in a window that allows permeation of gas (pressure adjusting window) 85. The gas permeable membrane 42 can adjust the inner pressure of the second chamber 22 filled with water vapor 66. The gas permeable membrane 42 is formed of a fluorine resin porous membrane (typically, a polytetrafluoroethylene (PTFE) membrane). The gas permeable membrane 42 is not limited to being formed of a porous polytetrafluoroethylene membrane, but may be formed of a porous polyethylene membrane, a porous polypropylene membrane, a porous ceramic membrane or the like.

The housing 20 is formed of, for example, stainless steel, iron, aluminum or FRP. In the structure of this embodiment, the housing 20 is formed of stainless steel. The housing 20 is not limited to being formed of stainless steel but may be formed of any preferable material which allows the housing 20 to float on the storage area 60. In the case where the housing 20 is to float on the seawater, the housing 20 is preferably formed of stainless steel or a resin which is durable against seawater.

In the structure of this embodiment, an opening 28 opened outward is formed in an area of the housing 20 that is below the first member 20a. The opening 28 may be used as an area in which a weight (ballast) that stabilizes the housing 20 is provided. In the case where the housing 20 is formed of a heavy material, a member that increases the buoyancy (namely, a material having a smaller specific gravity than that of water, for example, a member filled with air, styrene foam, etc.) may be located in the opening 28. The weight or the member that increases the buoyancy may be formed of a heat-insulating material (weight covered with a heat-insulating material, member filled with air, styrene foam, etc.), so that a heat-insulating function against the outer water is provided to improve the heat storage property of the member 25 (heat absorber). The housing 20 floating on the storage area 60 can be anchored so that the housing 20 is prevented by the weight of the anchor from moving.

The heat transmissive window 10 in this embodiment is formed of a light transmissive material, specifically, glass or a light transmissive resin. In the case where the heat transmissive window 10 is formed of a glass plate, the heat transmissive window 10 has an advantage of having a high durability against the sun because glass is more resistive against ultraviolet than a resin material. In the case where the heat transmissive window 10 is formed of a resin material (e.g., polycarbonate (PC), polyvinyl chloride (PVC), polymethylmethacrylate (PMMA)), the heat transmissive window 10 has a property of not being easily broken as compared with the heat transmissive window 10 formed of a glass plate.

In the structure shown in FIG. 2, the heat transmissive window 10 is held by a holding member 82 that holds a plate-like member. The holding member 82 is formed of, for example, rubber. The holding member 82 is secured to a part of the second member 20b and a part of the wall member 23a by a securing member 83 that secures the holding member 82 to the housing 20. In addition, in the structure of this embodiment, the heat transmissive window 10 is located in an inclined state in order to take in the light of the sun 70 (solar heat 72) efficiently. It is preferable that the heat transmissive window 10 is directed southward and is inclined so as to be directed toward the sun 70. Alternatively, a screw may be attached to a part of the housing 20 so that the housing 20 is rotatable to direct the heat transmissive window 10 toward the sun 70. In the case where the solar heat 72 is to be taken in through the heat transmissive window 10 with no influence of the direction toward the sun 70, the heat transmissive window 10 may be located horizontally.

The heat absorber 25 that absorbs the solar heat 74 transmitted through the heat transmissive window 10 is a member formed of, for example, a heat storing material or a metal member (iron plate, stainless steel plate, etc.). In the case where the heat absorber 25 is formed of a heat storing material, there is an advantage that even after the sun 70 sets, the thermal energy can be obtained for a long time from the heat storing material used to form the heat absorber 25 and the liquid 63 can be vaporized by the thermal energy. In consideration of the cost, it is preferable to use a low-cost iron plate for the heat absorber 25.

Examples of the heat storing material usable to form the heat absorber 25 include sensible heat storing materials such as water, stone, gravel, concrete, brick, powdered glass, earth, powdered iron and the like. Any of these materials may be put into a predetermined container and used as the heat absorber 25 in this embodiment. In the case where water (seawater or fresh water) is used as the heat storing material, a container to be used as an outer cover of the heat absorber 25 (e.g., metal container (stainless steel container, etc.) or resin container) is prepared in the housing 20 (specifically, located on the first member 20a) and the liquid in the storage area 60 is introduced thereinto. In this manner, the heat absorber 25 formed of the heat storing material can be conveniently constructed. Namely, the heat storing material used to form the heat absorber 25 can be obtained on the site, which is also advantageous in terms of cost.

The heat storing material used to form the heat absorber 25 may be a latent heat storing material such as Zn(NO₃)₂-2H₂O, CaO(NO₃)₂·4H₂O, NaHPO₄·12H₂O or the like instead of the sensible heat storing materials. Alternatively, a reaction heat storing material that uses reaction heat such as sodium sulfide, magnesium chloride or the like, or a paraffin-based heat storing material may be used.

In addition, it is preferable that the surface of the heat absorber 25 (or surface of a container used as the outer cover of the heat absorber 25) is black (or of a similar color) so that the solar heat 74 is absorbed at a higher efficiency. In the case where the heat absorber 25 is formed of a metal plate (e.g., iron plate), it is also preferable that the metal plate is black.

The heat absorber 25 may be located in a recessed portion that is formed in a part of the first member 20a of the housing 20. In the case where the recessed portion is formed in the first member 20a, the heat absorber 25 is accommodated in the recessed portion and therefore can be suppressed from being positionally shifted even if the housing 20 is swung. Alternatively, the heat absorber 25 may be located on a flat portion of the first member 20a because the heat absorber 25 is relatively heavy. Still alternatively, the heat absorber 25 may be secured on the first member 20a by use of securing means (welding, tightening member, adhesion, etc.).

In the housing 20 in this embodiment, a distilled water retrieval opening 26 is formed in the water storage 24 which is located in a bottom portion of the second chamber 22. A pump can be set in the distilled water retrieval opening 26 so that the distilled water 69 stored in the water storage 24 is pumped out. In a part of a storage for the liquid 63 in the first chamber 21 (above the first member 20a), a water discharge opening 27 for the liquid 63 is formed. The liquid 63 in the storage can be discharged through the water discharge opening 27. It is preferable that the water discharge opening 27 is located at a low position in the storage in the first chamber 21. The water discharge opening 27 may be used as an exit through which foreign objects (e.g., salt, sand, rubbish, etc.) accumulated in the storage is discharged.

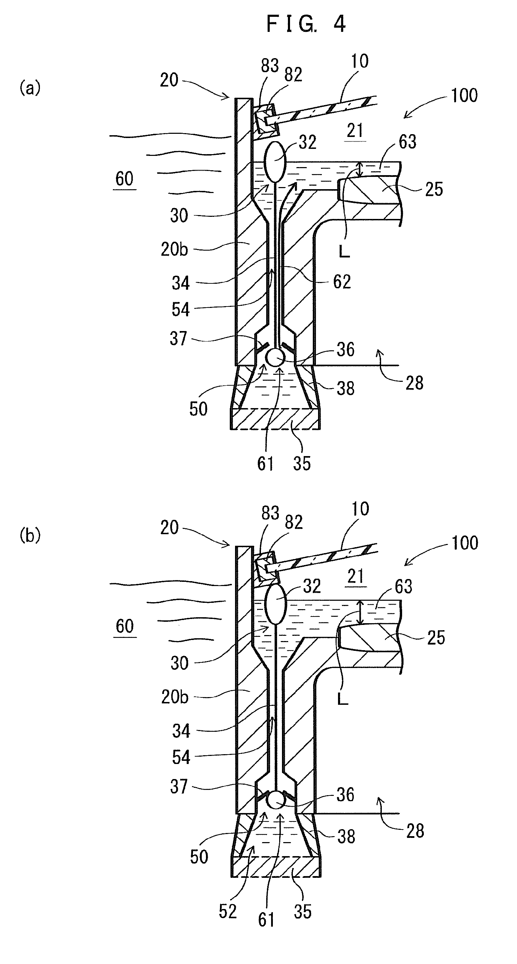

Now, with reference also to FIGs. 4(a) and (b), an operation of the distillation apparatus 100 in this embodiment will be described.

In the structure shown in FIG. 2, vaporization 64 of the liquid (e.g., seawater) 63 occurs by the thermal energy from the solar heat 74 and/or the heat absorber 25. When the water level (depth) L of the liquid 63 located on the heat absorber 25 becomes high, it becomes difficult to promote the vaporization of the liquid 63. Especially in the case where the liquid 63 is to be vaporized by the thermal energy from the heat absorber 25, when the water level (L) of the liquid 63 is high, the liquid 63 is not well heated, which decreases the efficiency of vaporizing the liquid 63. By contrast, in the case where the water level (depth) L of the liquid 63 becomes extremely low, when the vaporization of the liquid 63 is progressed by the thermal energy from the solar heat 74 and/or the heat absorber 25, a top surface of the heat absorber 25 is dried, which significantly decreases the vaporization efficiency.

Therefore, adjusting the water level L of the liquid 63 (liquid surface level) is important to improve the vaporization efficiency. In the structure of this embodiment, the water level L of the liquid 63 can be adjusted by the water level adjustment mechanism 30 in a simple manner (automatically).

As shown in FIG. 4(a), when the vaporization of the liquid 63 in the first chamber 21 is progressed and thus the water level L of the liquid 63 is lowered, the position of the float 32 floating at the liquid surface of the liquid 63 is also lowered. When this occurs, the stop valve (36, 37) connected to the float 32 via the coupling bar 34 is opened. Therefore, as represented by arrow 62, the distillation apparatus 100 is replenished with the liquid and thus the water level L of the liquid 63 is raised. Specifically, the stopper (ball) 36 connected to the bottom end of the coupling bar 34 moves downward and thus a gap is made between the stopper 36 and the blocking member 37. As a result, the liquid flows into the gap, which raises the water level L of the liquid 63.

Next, as shown in FIG. 4(b), when the water level L of the liquid 63 is raised, the position of the float 32 floating at the liquid surface of the liquid 63 is also raised. When this occurs, the stop valve (36, 37) connected to the float 32 via the coupling bar 34 is closed. Thus, the flow of the liquid stops. Namely, the water level L of the liquid 63 stops rising. Specifically, the stopper (ball) 36 connected to the bottom end of the coupling bar 34 moves upward and thus the gap between the stopper 36 and the blocking member 37 is closed. As a result, the liquid stops flowing into the gap.

Referring to FIG. 4(a), when the vaporization of the liquid 63 in the first chamber 21 is progressed again and the water level L of the liquid 63 is lowered, the stop valve (36, 37) is opened and the flow of the liquid starts. As a result, the water level L of the liquid 63 is raised. In this manner, the stop valve (36, 37) of the water level adjustment mechanism 30 is opened or closed, so that the water level L of the liquid 63 can be kept in a predetermined range (e.g., 0.1 mm to 10 mm).

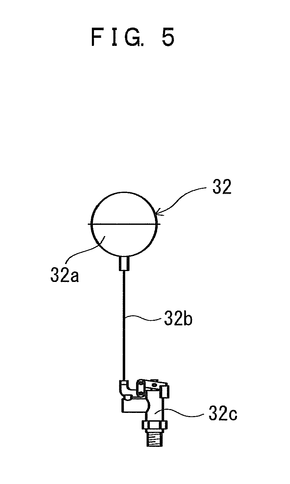

In FIG. 2 and FIG. 4, the float 32 is elliptical or oval. The float 32 is not limited to having such a shape but may be circular as shown in FIG. 5. In the float 32 shown in FIG. 5, a connection bar 32b is connected to a bottom portion of a spherical ball 32a. The connection bar 32b is connected to a securing member 32c that secures the coupling bar 34.

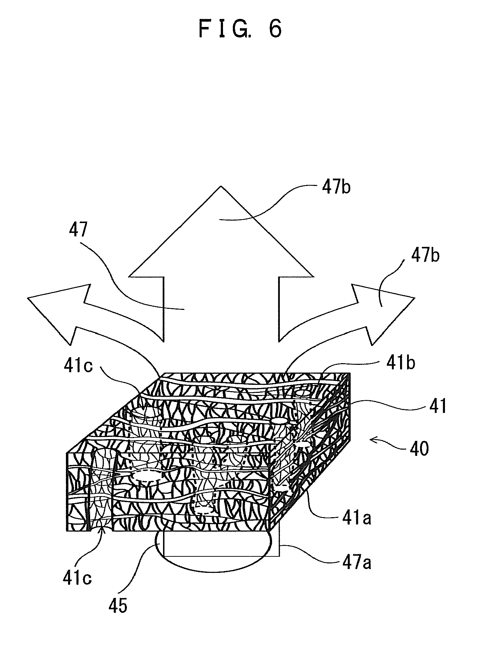

FIG. 6 schematically shows an example of structure of the water vapor permeable membrane 40 in this embodiment. The water vapor permeable membrane 40 in this embodiment is formed of a porous polytetrafluoroethylene film 41. An example of the porous polytetrafluoroethylene film 41 may be TEMISH (trade name; produced by Nitto Denko Corporation).

In the porous polytetrafluoroethylene film 41 shown in FIG. 6, micropores 41c (having a diameter of, for example, about 0.1 µm to 10 µm) running from one surface 41a to the other surface 41b of the film 41 are formed. This film (porous membrane) 41 has a function of blocking permeation of a waterdrop 45 (having a size of, for example, 100 µm to 3000 µm) while allowing permeation of water vapor 47 (having a diameter of, for example, 0.0004 µm) (arrows 47a and 47b). Therefore, use of the water vapor permeable membrane 40 allows the water vapor 47 to be selectively permeated. The water vapor 47 can be condensed to generate clean water (distilled water).

The porous film 41 as shown in FIG. 6 that has the function of holding liquid and allowing permeation of gas is usable as the gas permeable membrane 42 that adjusts the inner pressure and the outer pressure. This will be further described. In the case where the space in the second chamber 22 is sealed hermetically, breakage may occur due to a change in the inner pressure. By contrast, in the case where a through-hole is formed in the second chamber 22 to adjust the inner pressure, a problem of immersion with water or internal contamination occurs. The gas permeable membrane 42 formed of the porous film 41 as used in this embodiment can adjust the inner pressure and the outer pressure while having air permeability as well as dust-proofness and water-proofness. The water vapor permeable membrane 40 and the gas permeable membrane 42 may be formed of the same material or different materials.

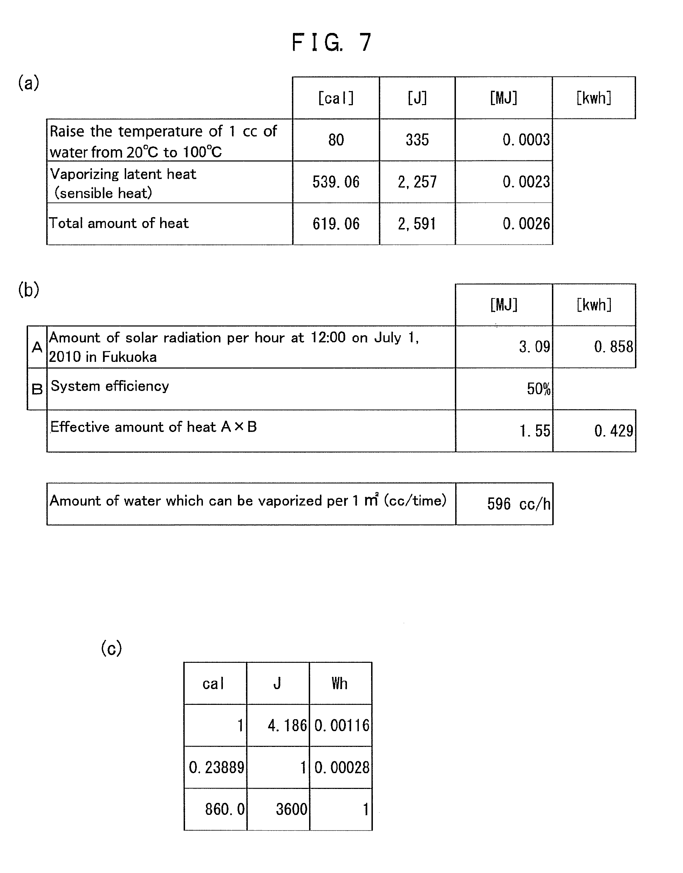

Now, with reference to FIGs. 7(a) through (c), rough estimations of an amount of vaporization and a proper liquid surface level (water level L) will be described. FIG. 7(a) shows amounts of heat required to vaporize water. FIG. 7(b) shows an amount of solar radiation, a system efficiency, and an amount of water (cc/time) which can be vaporized per 1 m². FIG. 7(c) shows conversion among cal (calorie), J (Joule) and Wh (watt-hour).

Now, in order to raise the temperature of 1 cc of water from 20°C to 100°C and vaporize 1 cc of water, 0.0026 MJ is necessary. The amount of solar radiation per hour at 12:00 on July 1, 2010 in Fukuoka is 3.09 MJ (data A). Assuming that the system efficiency is 50% (data B), the effective amount of heat (A x B) is 1.55 MJ. In consideration of these, the amount of water (cc/hour) which can be vaporized per 1 m² is 596 cc/h. Namely, in this time slot on this day in Fukuoka, 596 cc of water can be vaporized per 1 m². In other words, in order to vaporize water without drying the liquid surface, it is preferable that the water level (L) is kept at 0.596 mm.

The above-described conditions and water level (L) are merely exemplary, and the amount of solar radiation varies by district. The preferable water level (L) varies by location, but the distillation apparatus 100 in this embodiment can easily change the water level (L) to a level preferable to the district by adjusting the length of the coupling bar 34 (more specifically, the distance between the float 32 and the ball 36).

Structural conditions for the distillation apparatus 100 in this embodiment are as follows, for example. The size of the heat transmissive window 10 is, for example, width: 700 mm to 2000 mm; length: 700 mm to 4000 mm; and thickness: 4 mm to 10 mm. The size of the housing 20 is, for example, width: 900 mm to 2500 mm; length: 1400 mm to 6000 mm; and height: 800 mm to 1500 mm. The capacity of the first chamber 21 is, for example, 0.15 m³ to 5 m³. The capacity of the second chamber 22 is, for example, 0.15 m³ to 4 m³. The housing 20 may be large so that a large amount of distilled water 69 is generated, or the housing 20 may be small so that an amount of distilled water 69 for one person to drink is generated.

The distillation apparatus 100 in this embodiment can be floated on a sea, a pond, or an area storing contaminated water to vaporize the seawater or the contaminated water (water of a lake, etc.) by use of the solar heat 72. The distillation apparatus 100 (or the housing 20) is entirely cooled by the surrounding water to condense the water vapor 66. Thus, water suitable as drinking water (distilled water) can be obtained.

Specifically, the distillation apparatus 100 in this embodiment includes the heat absorber 25 that absorbs the solar heat 74 transmitted through the heat transmissive window 10, and the heat absorber 25 is provided in the housing 20 that secures the heat transmissive window 10 that transmits the solar heat 72. In an area of the housing 20 that is below the first chamber 21 in which the heat absorber 25 is located, the intake opening 50 through which raw water (e.g., seawater from the sea) is introduced is provided. The water level adjustment mechanism 30 that adjusts the water level L of the liquid 63 covering the heat absorber 25 is provided. Therefore, in the state where the distillation apparatus 100 in this embodiment floats on the storage area (sea, lake, etc.) 60, the distilled water (fresh water) 69 can be generated while the distillation apparatus 100 is automatically replenished with the liquid (seawater, etc.) used to generate the distilled water 69 by the operation of the water level adjustment mechanism 30. In addition, the distillation apparatus 100 in this embodiment, which uses the solar heat (72, 74), provides effects that a large amount of energy is not required and the facility cost can be suppressed as compared with the multi-stage flash method or the reverse osmosis method.

The first chamber 21 and the second chamber 22 of the housing 20 are connected to each other by use of the water vapor permeable membrane 40. Therefore, even when the distillation apparatus 100 is swung by the waves of the sea or the like, the water 67 condensed in the second chamber 22 does not return to the first chamber 21.

In the above embodiment, the water level adjustment mechanism 30 includes a float valve (32, 34, 36, 37). Alternatively, the water level adjustment mechanism 30 may have any other structure which can adjust the water level L of the liquid 63 in a simple manner. The water level adjustment mechanism 30 may be, for example, an adjustment mechanism that electronically senses the water level and opens or closes the valve.

The present invention has been described in detail so far. The above description provides a mere example. The present invention can be carried out in other embodiments and may be modified in any of various manners without departing from the gist thereof. For example, a plurality of (for example, two) intake openings 50 may be prepared, so that the float valve 30 is provided in each of a plurality of the introduction openings 54 leading to the intake openings 50. In the above embodiment, the housing 20 includes the first chamber 21 and the second chamber 22. Alternatively, the housing 20 may include another chamber in addition to the first chamber 21 and the second chamber 22.

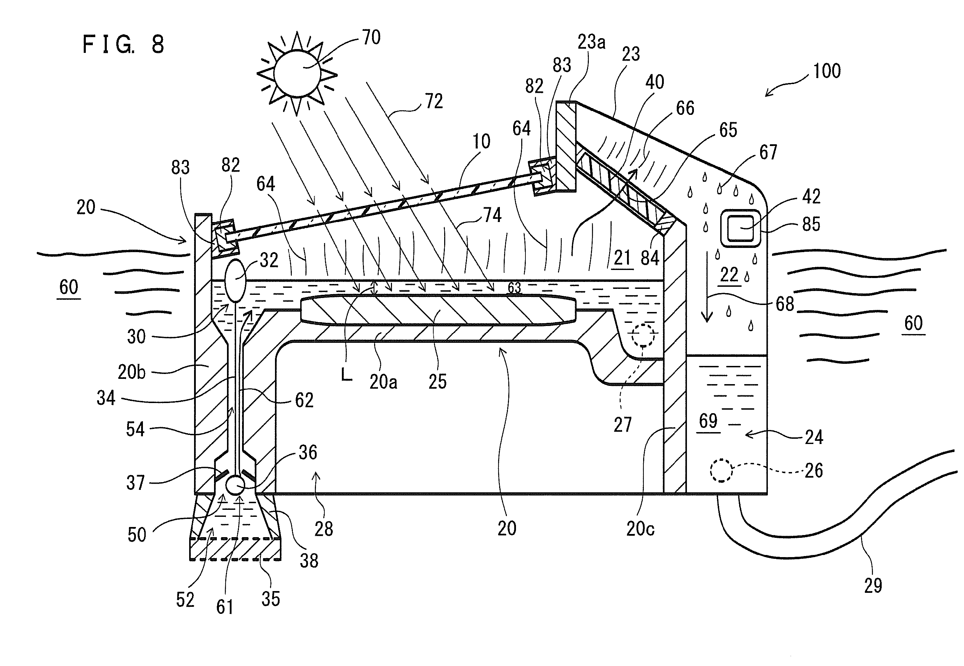

As shown in FIG. 8, one end of a pipe 29 may be attached to the second chamber 22 and the other end of the pipe 29 may be attached to a pump (not shown), so that the distilled water 69 stored in the water storage 24 in the second chamber 22 is pumped out. The pipe 29 may be formed of, for example, rubber, a resin or the like, or a metal material.

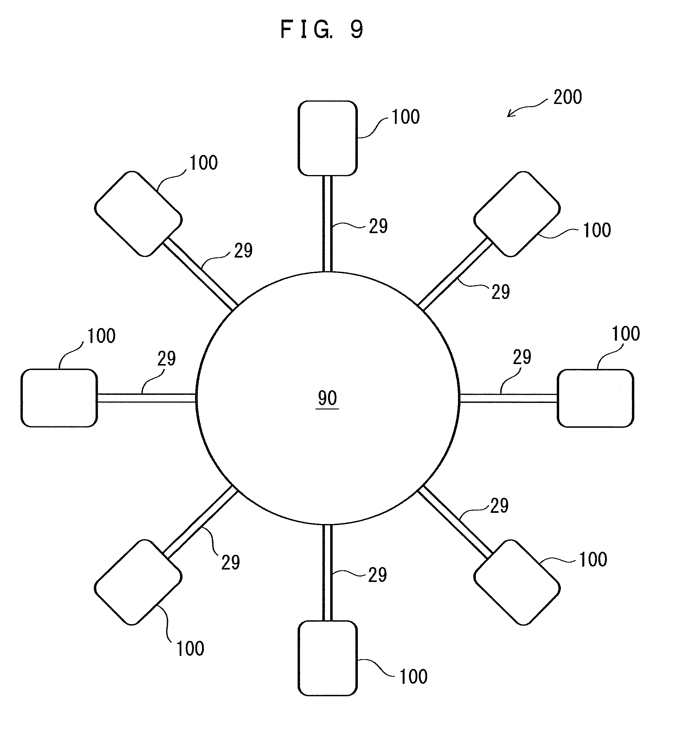

As shown in FIG. 9, a pump station (distillation apparatus station) 200, including a plurality of distillation apparatuses 100 (housings 20) floating on a water reservoir, pipes 29 respectively connected to the distillation apparatuses 100, and a pump unit 90 connected to the pipes 29, may be constructed. The pump unit 90 of the pump station 200 may float on the water reservoir, but alternatively may be installed on the land (on the ground). When the pump unit 90 is installed on the land, distilled water can be taken out from the plurality of distillation apparatuses 100 easily. Since the distilled water can be taken out from the plurality of distillation apparatuses 100, the amount of distilled water generation can be increased, which is more advantageous in practical use.

### INDUSTRIAL APPLICABILITY

According to the present invention, a distillation apparatus which can be automatically replenished with a liquid, does not require a large amount of energy and can be produced at suppressed facility cost is provided.

### DESCRIPTION OF REFERENCE SIGNS

- 10: Heat transmissive window
- 20: Housing
- 21: First chamber
- 22: Second chamber
- 23: Wall
- 23a: Wall member
- 24: Water storage
- 25: Heat absorber
- 26: Distilled water retrieval opening
- 27: Discharge opening
- 28: Opening
- 29: Pipe
- 30: Water level adjustment mechanism (float valve)
- 32: Float
- 32a: Ball
- 32b: Connection bar
- 32c: Securing member
- 34: Coupling bar
- 35: Filter
- 36: Stopper (ball)
- 37: Blocking member
- 38: Filter support member
- 40: Water vapor permeable membrane
- 42: Gas permeable membrane
- 50: Intake opening
- 52: Opening
- 54: Introduction opening
- 60: Storage area
- 64: Water vapor
- 66: Water vapor
- 67: Waterdrop
- 69: Distilled water
- 70: Sun
- 72, 74: Solar heat
- 82: Holding member
- 83: Securing member
- 90: Pump unit
- 100: Distillation apparatus
- 200: Pump station (distillation apparatus station)
- 1000: Distillation apparatus

## Claims

1. A distillation apparatus for generating distilled water by use of solar heat, the distillation apparatus, comprising:
a heat transmissive window that transmits the solar heat;
a housing that secures the heat transmissive window; and
a heat absorber that is located in the housing and absorbs the solar heat transmitted through the heat transmissive window;
wherein:
the housing includes:
a first chamber in which the heat absorber is located; and
a second chamber connected to the first chamber via a water vapor permeable membrane that allows permeation of water vapor generated in the first chamber;
an intake opening through which a liquid is introduced is provided below the first chamber; and
a water level adjustment mechanism that adjusts a water level of the liquid covering the heat absorber is provided in the first chamber.

2. The distillation apparatus according to claim 1, wherein:
the housing floats on a storage area in which a liquid is stored;
the liquid in the storage area is introduced through the intake opening;
the liquid introduced through the intake opening is held inside the first chamber so as to cover a surface of the heat absorber; and
water vapor from the liquid covering the surface of the heat absorber permeates through the water vapor permeable membrane and is condensed at a wall of the second chamber to become distilled water.

3. The distillation apparatus according to claim 1 or 2, wherein:
an introduction opening extending in a vertical direction from the intake opening is formed in the first chamber;
the water level adjustment mechanism is a float valve; and
the float valve includes:
a float located at a liquid surface in the first chamber;
a coupling bar connected to the float and located inside the introduction opening; and
a stop valve located at a bottom end of the coupling bar.

4. The distillation apparatus according to claim 3, wherein the housing includes;
a first member aon which the heat absorber is located;
a second member connected to the first member and having the introduction opening formed therein; and
a third member that separates the first chamber and the second chamber from each other.

5. The distillation apparatus according to claim 4, wherein the water vapor permeable membrane is located on a part of the third member.

6. The distillation apparatus according to claim 5, wherein the water vapor permeable membrane is formed of a porous polytetrafluoroethylene membrane.

7. The distillation apparatus according to any one of claims 4 through 6, wherein an opening opened outward is formed in an area of the housing that is below the first member.

8. The distillation apparatus according to any one of claims 1 through 7, wherein a filter that allows permeation of a liquid introduced through the intake opening is provided in the intake opening.

9. The distillation apparatus according to any one of claims 1 through 8, wherein a gas permeable membrane that adjusts an inner pressure and an outer pressure of the second chamber is provided in a part of the second chamber.

10. The distillation apparatus according to any one of claims 1 through 9, wherein the heat absorber is formed of an iron plate.

11. The distillation apparatus according to any one of claims 1 through 9, wherein the heat absorber is formed of a heat storing material.

12. The distillation apparatus according to any one of claims 1 through 11, wherein a surface of the heat absorber is black.

13. The distillation apparatus according to any one of claims 1 through 12, wherein the heat transmissive window is formed of glass or a light transmissive resin.

14. The distillation apparatus according to any one of claims 1 through 13, wherein the distillation apparatus is connected to a pipe that discharges the distilled water outside.

15. The distillation apparatus according to claim 14, wherein the pipe is connected to a pump unit that moves the distilled water in the pipe.

16. The distillation apparatus according to claim 15, wherein the pump unit is connected to a plurality of the distillation apparatuses via the pipe.

17. The distillation apparatus according to claim 15 or 16, wherein the pump unit is installed on land.

18. A distillation method for generating distilled water by use of solar heat, the distillation method comprising the steps of:
floating, on a storage area in which a liquid is stored, a housing that secures a heat transmissive window that transmits the solar heat;
introducing the liquid in the storage area into a first chamber of the housing;
vaporizing the liquid in the first chamber of the housing by the solar heat transmitted through the transmissive window; and
condensing water vapor, obtained by the vaporization, in a second chamber of the housing;
wherein a water level of the liquid in the first chamber of the housing is kept in a predetermined range by a water level adjustment mechanism.

19. The distillation method according to claim 18, wherein:
the water level adjustment mechanism is a float valve; and
an amount of the liquid to be introduced into the first chamber of the housing is automatically adjusted by the float valve.

20. The distillation method according to claim 18 or 19, wherein:
the water vapor obtained by vaporizing the liquid in the first chamber of the housing is moved to the second chamber of the housing through a water vapor permeable membrane, and is condensed at a wall of the second chamber of the housing.

21. The distillation method according to any one of claims 18 through 20, wherein the storage area is one selected from the group consisting of a sea, a lake and a pond.

22. The distillation method according to any one of claims 18 through 21, wherein:
a plurality of the housings float on the storage area;
the plurality of housings are each connected via a pipe to a pump unit that absorbs the distilled water; and
the distilled water is collected from the plurality of housings by the pump unit.
